# EUROPÄISCHE PATENTSCHRIFT

(11) **EP 2 905 129 B1**
(45) Veröffentlichungstag und Bekanntmachung des Hinweises auf die Patenterteilung: **30.11.2016**
(21) Anmeldenummer: 15153155.5
(22) Anmeldetag: 30.01.2015
(51) Int. Cl.: B32B 17/10, B32B 27/06, B32B 27/18, B32B 27/22

(54) **Verbundglaslaminate mit Wärmestrahlung abschirmenden Eigenschaften auf Basis von dünnen Folien aus weichmacherfreiem Polyvinylacetal**
Composite glass laminates with thermal radiation shielding properties based on thin films made of plasticiser-free polyvinyl acetal
Stratifiés de verre composite ayant des propriétés isolantes contre le rayonnement thermique à base de films minces en polyvinylacétal sans plastifiant

(30) Priorität: 05.02.2014 EP 14154020
(43) Veröffentlichungstag der Anmeldung: 12.08.2015
(73) Patentinhaber: Kuraray Europe GmbH, 65795 Hattersheim (DE)
(72) Erfinder: Keller, Uwe, D-53177 Bonn (DE)
(74) Vertreter: Kisters, Michael Marcus

(56) Entgegenhaltungen:
- EP-A1- 1 227 070
- EP-A1- 2 610 226
- EP-A1- 2 674 405
- EP-A1- 2 679 558
- US-A1- 2012 171 479

## Beschreibung

Verbundglaslaminate mit Wärmestrahlung abschirmenden Eigenschaften auf Basis von dünnen Folien aus weichmacherfreiem Polyvinylacetal

### Technisches Gebiet

Die vorliegende Erfindung betrifft ein Verfahren zur Herstellung von Verbundglasscheiben mit wärmeabschirmenden Eigenschaften unter Verwendung einer dünnen Zwischenschichtfolie auf Basis von weichmacherfreiem Polyvinylacetal.

Zur Herstellung von Verbundglasscheiben mit wärmeabschirmenden Eigenschaften sind u.a. Verfahren üblich, bei welchen dünne IR-absorbierend oder -reflektierend beschichtete PET-Folien zwischen mehrere Lagen weichmacherhaltiges Polyvinylacetal eingebettet werden. Nachteilig dabei ist, dass immer mindestens 3 Folienlagen (1 x funktionalisiertes PET, 2 x PVB-Folie) verwendet werden müssen, da PET mit der funktionalisierten Seite bzw. der Rückseite nicht direkt auf einer Glasoberfläche angeschmolzen werden kann.

Soweit man von diversen Beschichtungsoptionen der Glasoberfläche absieht, besteht die Alternative hierzu in der Verwendung von Zwischenschichtfolien, die im Volumen IR-Absorber enthalten. Hierfür werden beispielsweise nanoskalige Halbleiterpartikel, wie etwa ITO oder ATO, bei der Folienherstellung im Volumen der Folie möglichst gleichmäßig verteilt. Ein Nachteil liegt hierbei in der Schwierigkeit, die nanoskalige Verteilung der Partikel in einer weichmacherhaltigen Folienmatrix während eines Extrusionsverfahrens in Anwesenheit von diversen anderen Inhaltsstoffen beizubehalten, damit Agglomeration der Nanopartikel nicht in einer inakzeptablen Trübung resultiert.

Ein anderer Nachteil ist die erhöhte Komplexität der Folienherstellung, die durch Kombination des Merkmales "wärmeabsorbierend" mit weiteren Funktionsmerkmalen wie "akustischer Dämpfung", "Bandfilter", "keilförmiges Dickenprofil", "Farbton" zu einer Aufblähung des Produktsortiments beim Hersteller als auch beim Verarbeiter führt.

Als Alternative hierzu schlägt WO 2005/059013 A1 das Aufbringen von wärmeabsorbierenden Nanopartikeln durch ein Bedrucken von PVB-Folie mit speziellen Druckfarben vor. Jedoch können durch die Bedruckung die Haftungseigenschaften der Folie zur Glasoberfläche beeinträchtigt werden. Aufgrund des Umstandes, dass PVB-Folien zur problemlosen Entfernung der Luft in einem Laminationsverfahren eine aufgeraute Oberfläche aufweisen müssen, ist es warscheinlich, dass eine darauf aufgebrachte, teilweise auch im Sichtbaren absorbierende Schicht, nach Verpressen mit einer Glasoberfläche optisch uneinheitlich ist. Ausserdem ist das Bedrucken von dicken weichgemachten Folienbahnen schwierig, da sich solche Folien beim Abwicklen längen und danach wieder zurückschrumpfen können.

Wärmedämmende Folien nach dem Stand der Technik weisen wärmeabschirmende Partikel auf, die in der weichmacherhaltigen Schicht dispergiert sind. Da sich die anorganischen Partikel schlecht im verwendeten Weichmacher dispergieren lassen, besteht die Gefahr der Agglomeration der Partikel und damit von Trübungen der Folie bzw. des Glaslaminats.

### Aufgabe

Aufgabe der vorliegenden Erfindung war es daher, Zwischenschichtfolien bereitzustellen, die wärmeabschirmende Eigenschaften aufweisen, ohne nanoskalige Halbleiterpartikel im Volumen einer weichmacherhaltigen Zwischenschichtfolie dispergieren zu müssen.

Es wurde gefunden, dass wärmeabschirmende Partikel sehr gut in dünne Folien auf Basis von weichmacherarmem bzw. -freien Polyvinylacetal dispergieren lassen und diese Folien in den typischen Herstellverfahren für Verbundglaslaminate direkt auf einer der Glasoberflächen angeschmolzen werden können.

In Kombination mit mindestens einer Lage aus weichmacherhaltigem Polyvinylacetal können dann die üblichen geforderten Sicherheitseigenschaften von Verbundglaslaminaten erhalten werden.

Gegenstand der Erfindung ist daher ein wärmeabschirmendes Verbundglaslaminat, bestehend aus mindestens einer Folie A enthaltend ein Polyvinylacetal PA und optional mindestens einen Weichmacher WA und mindestens einer Folie B enthaltend ein Polyvinylacetal PB und mindestens einen Weichmacher WB zwischen zwei Glasscheiben, wobei jeweils vor dem Laminieren
- Folie A einen Anteil von Weichmacher WA von weniger als 16 Gew%,
- Folie B einen Anteil von Weichmacher WB von mindestens 16 Gew% und
- in Folie A wärmeabschirmende Partikel dispergiert sind.

Als wärmeabschirmend werden Folien betrachtet, welche bei vergleichender Messung und Auswertung gemäß ISO 13837:2008 (v = 14 m/s; Angabe in Prozent) in einem Testlaminat bestehend aus 2 x 2.1 mm Klarglas (z.B. Planilux™) und dazwischen angeordnet als Folie B eine Standard Automobilfolie (z.B. TROSIFOL VG R10 0.76) sowie eine Folie A ohne wärmeabschirmende Partikel und einem entsprechend aufgebautem Laminat, in welchem Folie A wärmeabschirmende Partikel aufweist, eine verringerte Total Solar Transmittance (TTS) wie folgt aufweisen:

TTS (Folie A ohne Beschichtung) - TTS (Folie A mit Beschichtung) > 10%, > 12.5%, > 15%, > 17.5% oder > 20%

Zusätzlich kann die erfindungsgemäße Ausstattung der Folie A mit wärmeabschirmende Partikeln bei Vergleich und Gegenüberstellung der beschriebenen Testlaminate den Vorteil aufweisen, dass die Lichttransmission im (TL gemessen nach EN 410; 2011, Angabe in Prozent) durch Einbringen der wärmeabschirmenden Partikel in geringerem Maße abgesenkt wird, wie der gesamte solare Energiedurchlass TTS (nach ISO 13837:2008 ,v = 14 m/s; Angabe in Prozent).

Bevorzugt besitzen erfindungsgemäß verwendeten wärmeabschirmenden Folien A Quotienten von TL / TTS von mehr als 1,2 oder von mehr als 1,25 oder von mehr als 1,30 oder von mehr als 1,35 oder von mehr als 1,40 oder von mehr als 1,45.

Die wärmeabschirmenden Folien A können als wärmeabschirmende Partikel z.B. ITO, ATO, AZO, IZO, Zinkantimonate, zinndotiertes Zinkoxid, siliziumdotiertes Zinkoxid, galliumdotiertes Zinkoxid, Wolframate wie z.B. LiWO3, NaWO3, CsWO3, Lanthanhexaborid oder Cerhexaborid enthalten.

Bevorzugt weisen die wärmeabschirmende Partikel einen mittleren Durchmesser von 5 bis 500 nm auf. Der Anteil an wärmeabschirmenden Partikel in den Folien A kann 1-20 Gew%, bevorzugt 2-10 Gew% betragen.

Die Dicke einer Folie A im Ausgangszustand vor dem Laminieren der Schichten beträgt 10 - 150 µm, bevorzugt 20 - 120 µm,

Im Folgenden wird mit dem "Ausgangszustand" der Zustand der Folien A und B vor dem Laminieren, d.h. im noch getrennten Zustand verstanden.

Die Folien A und B können im Ausgangszustand vor dem Laminieren der Schichten als auch in dem im Verbundglaslaminat befindlichen Zwischenschichtstapel einen einzigen Weichmacher als auch Gemische von Weichmachern sowohl unterschiedlicher und gleicher Zusammensetzung enthalten. Mit unterschiedlicher Zusammensetzung ist sowohl die Art der Weichmacher als auch deren Anteil im Gemisch gemeint. Bevorzugt weisen die Folie A und Folie B nach dem laminieren d.h. im fertig gestellten Verbundglas den gleichen Weichmacher WA und WB auf. In einer bevorzugten Variante enthält die Folie A in ihrem Ausgangszustand aber keinen Weichmacher und nach dem Laminieren den Weichmacher WB.

Erfindungsgemäß verwendete weichmacherhaltige Folien B enthalten im Ausgangszustand vor dem Laminieren der Schichten mindestens 16 Gew%, wie 16.1 - 36.0 Gew.%, bevorzugt 22.0 - 32.0 Gew.% und insbesondere 26.0 - 30.0 Gew.% Weichmacher.

Erfindungsgemäß verwendete Folien A können im Ausgangszustand vor dem Laminieren der Schichten weniger als 16 Gew.% (wie 15.9 Gew.%), weniger als 12 Gew.-%, weniger als 8 Gew.-%, weniger als 6 Gew.-%, weniger als 4 Gew.-%, weniger als 3 Gew.-%, weniger als 2 Gew.-%, weniger als 1 Gew-% oder gar keinen Weichmacher (0.0 Gew.%) enthalten. Bevorzugt enthalten die weichmacherarmen Folien A 0.0 - 8 Gew.-% Weichmacher.

Im erfindungsgemäßen Verfahren weist die Folie A im Ausgangszustand vor dem Laminieren der Schichten eine Dicke von nicht mehr als 20%, bevorzugt 15% und bevorzugt nicht mehr als 10% der Dicke der Folie bzw. der Folien B auf.

Die Dicke einer Folie A im Ausgangszustand vor dem Laminieren der Schichten beträgt 10 - 150 µm, bevorzugt 20 - 120 µm, bevorzugt 30 - 100 µm, bevorzugt 40 - 80 µm und am meisten bevorzugt 50 - 70 µm. Im Verbundglas nimmt die Dicke der Folie durch Übergang von Weichmacher aus Folie B zu.

Die Folie A wird separat von Folie B hergestellt (z.B. extrudiert und weist entweder gar keinen Weichmacher oder einen so geringen Weichmacheranteil auf, dass die Dispergierung der wärmeabschirmenden Partikel nicht nachteilig beeinflusst wird.

Die Dicke einer Folie B beträgt im Ausgangszustand 450 - 2500 µm, bevorzugt 600 - 1000 µm, bevorzugt 700 - 900 µm. Bei Verwendung mehrerer Folien B gilt entsprechendes für deren Gesamtdicke. Werden Folien B vor Herstellung des Sandwiches gereckt und / oder zusätzlich der Form einer Scheibe (z.B. Windschutzscheibe) bogenförmig angepasst, können sich die angegebenen Dicken zum Zeitpunkt der Lamination noch einmal um bis zu 20% verringern.

Mindestens eine dünne, wärmeabschirmende Folie A ist zu einer Glasoberfläche des erfindungsgemäßen Verbundglaslaminats orientiert. Es ist auch möglich, auf beide Glasoberflächen jeweils eine Folie A aufzubringen, so dass ein Verbundglaslaminat mit einer Schichtabfolge Glass/Folie A/ Folie B/ Folie A / Glass vorliegt. Hierbei kann die Dekoration der Folien A gleich oder unterschiedlich sein. Beispielsweise kann dabei eine der Folien A wärmeabschirmende Partikel aufweisen und die zweite Folie A elektrisch leitfähige Strukturen, wie etwa Heizdrähte, Antennen oder andere Schichten mit optischen Funktionen aufweisen.

Bei Automobilverglasung ist es aus ästhetischen und Dauerhaftigkeitsgründen nicht bevorzugt, die Kanten der Verbundglaslaminate mit Dichtstoffen zu versiegeln. Dies begünstigt die Anfälligkeit solcher Verglasungen gegenüber Ausbildung von Kantendefekten wie etwa Ablösungen der Schichten untereinander (Delaminationen) oder Korrosion bzw. chemischer Veränderung einer bis zur Kante des Laminates reichenden IR-absorbierenden Schicht.

Im erfindungsgemäßen Verfahren kann die weichmacherarme Folie A so zugeschnitten und positioniert werden, dass sie im Verbundglaslaminat nicht überall bis zum Rand des Laminates reicht. Insbesondere kann die Folie A im Randbereich um mindestens 1 mm kleiner sein als mindestens eine Glasscheibe sodass die Folie B in diesem Randbereich in direktem Kontakt mit mindestens einer Glasscheibe ist.

Weiterhin kann die dünne, im Ausgangszustand weichmacherarme oder weichmacherfreie Folie A vor dem Einlegen in den Glas / Foliensandwich perforiert werden, so dass sie Aussparungen wie Durchbrüche, Löcher, Schlitze in beliebigen geometrischen Mustern aufweisen kann.

So kann die Folie A mindestens eine Aussparung aufweisen, sodass die Folie B durch diese Aussparung in direktem Kontakt mit der an Folie A anliegenden Glasscheibe ist. Nach dem Verkleben zum fertigen Verbundglas ist die Folie B mit im Ausgangszustand höherem Weichmachergehalt an diesen Stellen mit den Glasscheiben ohne Unterbrechung verklebt. Insbesondere können so Aussparungen an Stellen des Verbundglases erhalten werden, hinter welchen Sensor-, Optik-, Antennenelemente ansonsten durch eine wärmeabschirmende Schicht in ihrer Funktion beeinträchtigt werden würden.

Die erfindungsgemäß eingesetzten Folien A und B enthalten Polyvinylacetale, welche durch Acetalisierung von Polyvinylalkohol oder Ethylen-Vinylalkohol-Copolymer hergestellt werden.

Die Folien können Polyvinylacetale mit jeweils unterschiedlichem Polyvinyl-alkohol-gehalt, Acetalisierungsgrad, Restacetatgehalt, Ethylenanteil, Molekulargewicht bzw. unterschiedlichen Kettenlängen des Aldehydes der Acetalgruppen enthalten.

Insbesondere können die zur Herstellung der Polyvinylacetale eingesetzten Aldehyde oder Ketoverbindungen linear oder verzweigt (d.h. vom "n" oder "iso"-Typs) mit 2 bis 10 Kohlenstoffatomen sein, was zu entsprechenden linearen oder verzweigten Acetalgruppen führt. Die Polyvinylacetale werden entsprechend als "Polyvinyl(iso)acetale" oder "Polyvinyl(n)-acetale" bezeichnet.

Das erfindungsgemäß verwendete Polyvinyl(n)acetal resultiert insbesondere aus der Umsetzung von mindestens einem Polvinylalkohol mit einer oder mehreren aliphatischen unverzweigten Ketoverbindung mit 2 bis 10 Kohlenstoffatomen. Bevorzugt wird hierzu n-Butyraldehyd verwendet.

Die zur Herstellung der Polyvinylacetale in den Folien A oder B verwendeten Polyvinylalkohole oder Ethylen-Vinylalkohol-Copolymere können jeweils gleich oder unterschiedlich, rein oder eine Mischung von Polyvinylalkoholen oder Ethylen-Vinylalkohol-Copolymere mit unterschiedlichem Polymerisationsgrad oder Hydrolysegrad sein.

Der Polyvinylacetatgehalt der Polyvinylacetale in den Folien A oder B kann durch Verwendung eines zu einem entsprechenden Grad verseiften Polyvinylalkohols oder Ethylen-Vinylalkohol-Copolymer eingestellt werden. Durch den Polyvinylacetatgehalt wird die Polarität des Polyvinylacetals beeinflusst, wodurch sich auch die Weichmacherverträglichkeit und die mechanische Festigkeit der jeweiligen Schicht ändern. Es ist auch möglich, die Acetalisierung der Polyvinylalkohole oder Ethylen-Vinylalkohol-Copolymere mit einem Gemisch aus mehreren Aldehyden oder Ketoverbindungen durchzuführen.

Bevorzugt enthalten die Folien A oder B Polyvinylacetale mit einem Anteil an Polyvinylacetatgruppen bezogen auf die Schichten jeweils gleich oder unterschiedlich 0.1 bis 20 Mol%, bevorzugt 0,5 bis 3 Mol% oder 5 bis 8 Mol%.

Der Polyvinylalkoholgehalt der verwendeten Polyvinylacetale PA der im Ausgangszustand weichmacherärmeren Folie A kann zwischen 6 - 26 Gew.-%, 8 - 24 Gew.-%, 10 - 22 Gew.-%, 12 - 21 Gew.-%, 14 - 20 Gew.-%, 16 - 19 Gew.-% und bevorzugt zwischen 16 und 21 Gew.-% oder 10 - 16 Gew.-% betragen.

Der Polyvinylalkoholgehalt der verwendeten Polyvinylacetale PB der im Ausgangszustand weichmacherreicheren Folie B kann zwischen 14 - 26 Gew.-%, 16 - 24 Gew.-%, 17 - 23 Gew.-% und bevorzugt zwischen 18 und 21 Gew.-% betragen.

Die Folien A oder B enthalten bevorzugt unvernetztes Polyvinylacetal. Der Einsatz von vernetzten Polyvinylacetalen ist ebenso möglich. Verfahren zur Vernetzung von Polyvinylacetalen sind z.B. in EP 1527107 B1 und WO 2004/063231 A1 (thermische Selbstvernetzung von Carboxylgruppenhaltigen Polyvinylacetalen), EP 1606325 A1 (mit Polyaldehyden vernetzte Polyvinylacetale) und WO 03/020776 A1 (mit Glyoxylsäure vernetzte Polyvinylacetale) beschrieben.

Die erfindungsgemäß eingesetzten Folien A und/oder B können als Weichmacher eine oder mehrere Verbindungen ausgewählt aus folgenden Gruppen enthalten:
- Ester von mehrwertigen aliphatischen oder aromatischen Säuren, z.B. Dialkyladipate wie Dihexyladipat, Dioctyladipat, Hexylcyclohexyladipat, Mischungen aus Heptyl- und Nonyl-adipaten, Diisononyladipat, Heptylnonyl-adipat sowie Ester der Adipinsäure mit cycloaliphatischen oder Etherbindungen enthaltenden Esteralkoholen, Dialkylsebazate wie Dibutylsebazat sowie Ester der Sebazinsäure mit cycloaliphatischen oder Etherbindungen enthaltenden Esteralkoholen, Estern der Phthalsäure wie Butylbenzylphthalat oder Bis-2-butoxyethylphthalat
- Ester oder Ether von mehrwertigen aliphatischen oder aromatischen Alkoholen oder Oligoetherglykolen mit einem oder mehreren unverzweigen oder verzweigten aliphatischen oder aromatischen Substituenten, wie z.B. Estern von Glycerin, Di-, Tri- oder Tetraglykolen mit linearen oder verzweigten ali-phatischen oder cycloaliphatischen Carbonsäuren; Als Beispiele für letztere Gruppe können Diethylenglykol-bis-(2-ethyl-hexanoat), Triethylenglykol-bis-(2-ethyl-hexanoat), Tri-ethylen-glykol-bis-(2-ethylbu-ta-no-at), Tetra-ethylen-glykol-bis-n-heptanoat, Triethylengly-kol-bis-n-heptanoat, Triethylenglykol-bis-n-hexanoat, Tetraethylen-glykol-dimethyl-ether und/oder Dipropylenglykolbenzoat dienen
- Phosphate mit aliphatischen oder aromatischen Esteralkoholen wie z.B. Tris(2-ethylhexyl)phosphat (TOF), Triethylphosphat, Diphenyl-2-ethylhexylphosphat, und/oder Trikresylphosphat
- Ester der Zitronensäure, Bernsteinsäure und/oder Fumarsäure

Per Definition sind Weichmacher hochsiedende organische Flüssigkeiten. Aus diesem Grund können auch weitere Arten von organischen Flüssigkeiten mit einem Siedepunkt höher als 120 °C als Weichmacher verwendet werden.

Besonders bevorzugt enthalten die Folien A in den Varianten, bei welchen in Folie A im Ausganszustand ein Weichmacher WA vorhanden ist sowie Folien B 1,2-Cyclohexandicarbonsäurediisononylester (DINCH) oder Triethylenglykol-bis-2-ethylhexanoat (3GO bzw. 3G8) als Weichmacher.

Zusätzlich können die Folien A und B weitere Zusätze enthalten wie Restmengen an Wasser, UV-Absorber, Antioxidantien, Haftungsregulatoren, optische Aufheller bzw. fluoreszierende Zusätze, Stabilisatoren, Farbmittel, Verarbeitungshilfsmittel, organische Nanopartikel, pyrogene Kieselsäure und/oder oberflächen-aktive Stoffe enthalten. Insbesondere kann Folie B als Haftungsregulatoren 0,001 bis 0,1 Gew.% Alkali- und/oder Erdalkalisalze von Carboxylsäuren aufweisen.

Zur Vermeidung von Korrosion an den wärmeabschirmende Partikeln ist bevorzugt, das Folie A weniger als 150 ppm Chloridionen und/oder Nitrationen und/oder Sulfationen aufweist.

So kann der Chloridgehalt der Folie A geringer als 150 ppm, bevorzugt geringer als 100 ppm und insbesondere geringer als 50 ppm sein. Im Idealfall beträgt der Chloridgehalt der Folie A weniger als 10 ppm oder sogar 0 ppm.

Optional kann der Nitratgehalt der Folie A Folie weniger als 150 ppm betragen, bevorzugt weniger als 100 ppm und insbesondere weniger als 50 ppm betragen. Im Idealfall beträgt der Nitratgehalt der Folie A weniger als 10 ppm oder sogar 0 ppm.

Wiederum optional kann der Sulfatgehalt der Folie A Folie weniger als 150 ppm betragen, bevorzugt weniger als 100 ppm und insbesondere weniger als 50 ppm betragen. Im Idealfall beträgt der Sulfatgehalt der Folie A weniger als 10 ppm oder sogar 0 ppm.

Zusätzlich kann Folie A mehr als 0 ppm Magnesiumionen aufweisen. Bevorzugt beträgt der Magnesiumgehalt mehr als 5 ppm besonders bevorzugt 10 ppm, insbesondere 5 - 20 ppm

Weiterer Gegenstand der vorliegenden Erfindung ist ein Verfahren zur Herstellung der beschriebenen wärmeabschirmenden Verbundverglasungen, in denen die Folie A auf einer Glasscheibe positioniert, anschließend mit mindestens einer Folie B abgedeckt wird, auf die eine zweite Glasscheibe gelegt wird.

Alternativ ist es möglich, Folie B auf einer Glasscheibe zu positionieren, anschließend mit mindestens einer Folie A abzudecken und die eine zweite Glasscheibe aufzulegen. Natürlich ist es auch möglich, zunächst die Folie A und Folie B zusammenzubringen und dann gemeinsam auf einer Glasscheibe zu positionieren.

Es ist erfindungsgemäß möglich, zunächst die Folie A auf eine Glasscheibe durch erhöhte Temperatur vollflächig oder lokal anzuschmelzen und dann mit der Folie B abzudecken. Alternativ können die Folien A und B gemeinsam zwischen zwei Glasscheiben positioniert werden und bei erhöhter Temperatur verschmolzen werden.

Der Laminationsschritt zur Herstellung eines Verbundglases wird bevorzugt so durchgeführt, dass die Folien A und B zwischen zwei Glasscheiben positioniert werden und der so vorbereitete Schichtkörper unter erhöhtem oder vermindertem Druck und erhöhter Temperatur zu einem Laminat verpresst wird.

Zur Laminierung des Schichtkörpers können die dem Fachmann geläufigen Verfahren mit und ohne vorhergehender Herstellung eines Vorverbundes eingesetzt werden.

Sogenannte Autoklavenprozesse werden bei einem erhöhten Druck von ca. 10 bis 15 bar und Temperaturen von 100 bis 145 °C über ca. 2 Stunden durchgeführt. Vakuumsack- oder Vakuumring-verfahren z.B. gemäß EP 1 235 683 B1 arbeiten bei ca. 200 mbar und 130 bis 145 °C

Es sind auch sog. Vakuumlaminatoren einsetzbar. Diese bestehen aus einer beheizbaren und evakuierbaren Kammer, in denen Verbund-verglasungen innerhalb von 30 - 60 Minuten laminiert werden können. Verminderte Drücke von 0,01 bis 300 mbar und Temperaturen von 100 bis 200 °C, insbesondere 130 - 160 °C haben sich in der Praxis bewährt.

Im einfachsten Fall wird zur Herstellung der Verbundglaslaminate Folie A oder B auf eine Glasscheibe positioniert und hierzu synchron oder darauffolgend die weitere Folie B bzw. A. Im Anschluss daran wird die zweite Glasscheibe aufgelegt und ein Glasfolienverbund erzeugt. Überschüssige Luft kann danach mithilfe eines beliebigen dem Fachmann bekannten Vorverbundverfahrens entfernt werden. Hierbei erfolgt auch bereits ein erstes leichtes Verkleben der Schichten untereinander sowie mit dem Glas.

Der Glasfolienverbund kann abschließend einem Autoklavenprozess unterworfen werden. Bevorzugt wird Folie A auf der ersten Glasscheibe positioniert und mit der dickeren Folie B bedeckt, bevor die zweite Glasscheibe aufgelegt wird. Das Verfahren kann in vielen denkbaren und grundsätzlich praktikablen Varianten durchgeführt werden. Beispielsweise wird Folie A einfach von einer Rolle entsprechender Breite entnommen wogegen Folie B vorher auf Maß des herzustellenden Verbundglases zugeschnitten wurde. Dies ist insbesondere im Fall von Windschutzscheiben und anderen Automobilverglasungsteilen von Vorteil. In diesem Fall ist es besonders vorteilhaft, die dickere Folie B vor Zuschnitt zusätzlich noch zu Recken. Dies ermöglicht einen sparsameren Folieneinsatz bzw. für den Fall, dass Folie B ein Farbkeil aufweist, das Anpassen von dessen Krümmung an den oberen Scheibenrand.

Im Automobilbereich, insbesondere zur Herstellung von Windschutzscheiben werden häufig Folien verwendet, die im oberen Bereich ein sog. Farbband aufweisen. Hierzu kann entweder der obere Teil der Folien A und B mit einer entsprechend eingefärbten Polymerschmelze coextrudiert werden oder es kann in einem Mehrschichtsystem eine der Folien A und B in Teilbereichen eine unterschiedliche Färbung aufweisen. In der vorliegenden Erfindung ist dies durch vollständiges oder teilweises Einfärben zumindest einer der Folien A und B realisierbar.

Erfindungsgemäß können die Folien B daher einen Farbkeil aufweisen, welcher insbesondere bereits in einem vorgelagerten Prozessschritt der Geometrie einer Windsschutzscheibe angepasst wurde.

Es auch möglich das die Folien B ein keilförmige Dickenprofil besitzen. Hierdurch erhält das erfindungsgemäße Verbundglaslaminat selbst bei planparallelem Dickenprofil der Folie A ein keilförmiges Dickenprofil und kann in KFZ-Windschutzscheiben für HUD Displays eingesetzt werden.

Im einfachsten Fall ist die Folie B eine handelsüblichen PVB-Folie mit oder ohne Farbband und mit oder ohne keilförmigen Dickenprofil. Ebenfalls können Folien B mit darin zum IR-Schutz dispergierten Nanopartikeln als auch gefärbte Folien verwendet werden. Natürlich kann eine Folie B auch eine Folie mit Akustikfunktion sein, so dass durch Kombination mit einer Folie A verbesserte Schalldämmeigenschaften erhalten werden. Natürlich kann eine Folie B bereits auch mehrere der genannten Funktionen in sich vereinen.

Die Herstellung der dünnen Folien A erfolgt in der Regel durch Extrusion unter Verwendung einer Cast-Film Linie oder als Blasfolie. Hierbei kann eine Oberflächenrauhigkeit durch kontrollierten Fließbruch oder beim Cast-Film Verfahren zusätzlich durch Verwendung einer strukturierten Chillroll erfolgen.

Zusätzlich kann einer bereits hergestellten Folie durch einen Prägevorgang zwischen mindestens einem Walzenpaar eine regelmäßige, nicht stochastische Rauhigkeit aufgeprägt werden. Bevorzugt weisen erfindungsgemäß verwendete Folien eine einseitige Oberflächenstruktur mit einer Rauhigkeit Rz von 0 bis 25 µm, bevorzugt Rz von 1 bis 20 µm, besonders bevorzugt Rz von 3 bis 15 µm und insbesondere Rz von 4 bis 12 µm auf. Besonders bevorzugt ist, wenn die mit der Glasscheibe in Kontakt kommende Seite der Folie A eine Oberflächenrauhigkeit Rz von nicht mehr als 20% ihrer Dicke aufweist. Die mit der wärmeabschirmenden Beschichtung versehene Oberfläche weist vor Aufbringen der Beschichtung bevorzugt eine besonders geringe Oberflächenrauhigkeit auf. Insbesondere beträgt hier der Rauhigkeitsparameter Ra weniger als 3 µm und Rz weniger als 5 µm.

## Patentansprüche

1. Wärmeabschirmendes Verbundglaslaminat, bestehend aus mindestens einer Folie A enthaltend ein Polyvinylacetal PA und optional mindestens einen Weichmacher WA und mindestens einer Folie B enthaltend ein Polyvinylacetal PB und mindestens einen Weichmacher WB zwischen zwei Glasscheiben, **dadurch gekennzeichnet, dass** jeweils vor dem Laminieren
- Folie A einen Anteil von Weichmacher WA von weniger als 16 Gew%,
- Folie B einen Anteil von Weichmacher WB von mindestens 16 Gew% und
- in Folie A wärmeabschirmende Partikel dispergiert sind.

2. Wärmeabschirmendes Verbundglaslaminat nach Anspruch 1 **dadurch gekennzeichnet, dass** die wärmeabschirmende Partikel der Folie A mindestens eine Verbindung ausgewählt aus der Gruppe ITO, ATO, AZO, IZO, Zinkantimonate, zinndotiertes Zinkoxid, siliziumdotiertes Zinkoxid, galliumdotiertes Zinkoxid, LiWO₃, NaWO₃, CsWO₃ oder Lanthanhexaborid enthalten.

3. Wärmeabschirmendes Verbundglaslaminat nach Anspruch 1 oder 2 **dadurch gekennzeichnet, dass** die wärmeabschirmende Partikel einen mittleren Durchmesser von 5 bis 500 nm aufweisen.

4. Wärmeabschirmendes Verbundglaslaminat nach einem der Ansprüche 1 bis 3 **dadurch gekennzeichnet, dass** die Folie A ein Polyvinylacetal PA mit einem Anteil an Vinylalkoholgruppen von 6 bis 26 Gew.% und die Folie B ein Polyvinylacetal PB mit einem Anteil an Vinylalkoholgruppen von 14 bis 26 Gew.% aufweist.

5. Wärmeabschirmendes Verbundglaslaminat nach einem der Ansprüche 1 bis 4 **dadurch gekennzeichnet, dass** die Folie B 0,001 bis 0,1 Gew.% Alkali- und/oder Erdalkalisalze von Carboxylsäuren aufweist.

6. Wärmeabschirmendes Verbundglaslaminat nach einem der Ansprüche 1 bis 5 **dadurch gekennzeichnet, dass** die Folie A eine kleinere Fläche als Folie B aufweist.

7. Wärmeabschirmendes Verbundglaslaminat nach einem der Ansprüche 1 bis 6 **dadurch gekennzeichnet, dass** die Folie A mindestens eine Aussparung aufweist, sodass die Folie B durch diese Aussparung in direktem Kontakt mit der an Folie A anliegenden Glasscheibe ist.

8. Wärmeabschirmendes Verbundglaslaminat nach einem der Ansprüche 1 bis 7 **dadurch gekennzeichnet, dass** die Folie B aus mindestens zwei Teilfolien B' und B" besteht, die einen unterschiedlichen Weichmachergehalt aufweisen.

9. Wärmeabschirmendes Verbundglaslaminat nach einem der Ansprüche 1 bis 8 **dadurch gekennzeichnet, dass** die Folie B ein keilförmiges Dickenprofil aufweist.

10. Wärmeabschirmendes Verbundglaslaminat nach einem der Ansprüche 1 bis 9 **dadurch gekennzeichnet, dass** die Folie B einen farbigen Teilbereich aufweist.

11. Wärmeabschirmendes Verbundglaslaminat nach einem der Ansprüche 1 bis 10 **dadurch gekennzeichnet, dass** die Folie A einen farbigen Teilbereich aufweist.

12. Wärmeabschirmendes Verbundglaslaminat nach einem der Ansprüche 1 bis 11 **dadurch gekennzeichnet, dass** die Folie A eine Dicke von 1 - 150 µm aufweist.

13. Wärmeabschirmendes Verbundglaslaminat nach einem der Ansprüche 1 bis 12 **dadurch gekennzeichnet, dass** Folie A weniger als 150 ppm Chloridionen und/oder Nitrationen und/oder Sulfationen aufweist.

14. Wärmeabschirmendes Verbundglaslaminat nach einem der Ansprüche 1 bis 13 **dadurch gekennzeichnet, dass** Folie A mehr als 0 ppm Magnesiumionen aufweist.

15. Verfahren zur Herstellung eines Verbundglaslaminats nach einem der Ansprüche 1 bis 12 **dadurch gekennzeichnet, dass** die Folie A auf einer Glasscheibe positioniert, anschließend mit mindestens einer Folie B abgedeckt wird, auf die eine zweite Glasscheibe gelegt wird.

## Claims

1. A heat-shielding laminated glass laminate, consisting of at least one film A containing a polyvinyl acetal PA and optionally at least one plasticiser WA and at least one film B containing a polyvinyl acetal PB and at least one plasticiser WB between two glass panes, characterised that in each case prior to lamination
- a proportion of plasticiser WA of less than 16 % by weight is dispersed in film A,
- a proportion of plasticiser WB of at least 16 % by weight is dispersed in film B, and
- heat-shielding particles are dispersed in film A.

2. The heat-shielding laminated glass laminate according to claim 1, **characterised in that** the heat-shielding particles of film A contain at least one compound selected from the group ITO, ATO, AZO, IZO, zinc antimonates, tin-doped zinc oxide, silicon-doped zinc oxide, gallium-doped zinc oxide, LiWO₃, NaWO₃, CsWO₃, or lanthanum hexaboride.

3. The heat-shielding laminated glass laminate according to claim 1 or 2, **characterised in that** the heat-shielding particles have a mean diameter of from 5 to 500 nm.

4. The heat-shielding laminated glass laminate according to any one of claims 1 to 3, **characterised in that** the film A comprises a polyvinyl acetal PA with a proportion of vinyl alcohol groups of from 6 to 26 % by weight and the film B comprises a polyvinyl acetal PB with a proportion of vinyl alcohol groups of from 14 to 26 % by weight.

5. The heat-shielding laminated glass laminate according to any one of claims 1 to 4, **characterised in that** the film B comprises 0.001 to 0.1 % by weight alkaline and/or alkaline earth salts of carboxylic acids.

6. The heat-shielding laminated glass laminate according to any one of claims 1 to 5, **characterised in that** the film A has a smaller surface area than film B.

7. The heat-shielding laminated glass laminate according to any one of claims 1 to 6, **characterised in that** the film A has at least one opening, such that by means of this opening the film B is in direct contact with the glass pane bearing against film A.

8. The heat-shielding laminated glass laminate according to any one of claims 1 to 7, **characterised in that** the film B consists of at least two sub-films B' and B", which have a different plasticiser content.

9. The heat-shielding laminated glass laminate according to any one of claims 1 to 8, **characterised in that** the film B has a wedge-shaped thickness profile.

10. The heat-shielding laminated glass laminate according to any one of claims 1 to 9, **characterised in that** the film B has a coloured region.

11. The heat-shielding laminated glass laminate according to any one of claims 1 to 10, **characterised in that** film A has a coloured region.

12. The heat-shielding laminated glass laminate according to any one of claims 1 to 11, **characterised in that** the film A has a thickness of 1-150 µm.

13. The heat-shielding laminated glass laminate according to any one of claims 1 to 12, **characterised in that** film A has less than 150 ppm chloride ions and/or nitrate ions and/or sulphate ions.

14. The heat-shielding laminated glass laminate according to any one of claims 1 to 13, **characterised in that** film A has more than 0 ppm magnesium ions.

15. A method for producing a laminated glass laminate according to any one of claims 1 to 12, **characterised in that** the film A is positioned on a glass pane, is then covered by at least one film B, and a second glass pane is then applied.

## Revendications

1. Panneau de verre feuilleté aux propriétés d'écran thermique, constitué d'au moins une feuille A contenant un acétal de polyvinyle PA et optionnellement au moins un plastifiant WA et d'au moins une feuille B contenant un acétal de polyvinyle PB et au moins un plastifiant WB lesquelles sont disposées entre deux vitres, **caractérisé en ce qu'**avant le processus de laminage,
- la feuille A présente une proportion de plastifiant WA inférieure à 16 % en poids,
- la feuille B présente une proportion de plastifiant WB supérieure ou égale à 16 % en poids, et
- des particules aux propriétés d'écran thermique sont dispersées dans la feuille A.

2. Panneau de verre feuilleté aux propriétés d'écran thermique selon la revendication 1, **caractérisé en ce que** les particules aux propriétés d'écran thermique de la feuille A contiennent au moins un composé choisi dans le groupe formé par ITO, ATO, AZO, IZO, des antimoniates de zinc, l'oxyde de zinc dopé à l'étain, l'oxyde de zinc dopé au silicium, l'oxyde de zinc dopé au gallium, LiWO₃, NaWO₃, CsWO₃ ou l'hexaborure de lanthane.

3. Panneau de verre feuilleté aux propriétés d'écran thermique selon les revendications 1 ou 2, **caractérisé en ce que** les particules aux propriétés d'écran thermique présentent un diamètre moyen compris entre 5 et 500 nm.

4. Panneau de verre feuilleté aux propriétés d'écran thermique selon l'une des revendications 1 à 3, **caractérisé en ce que** la feuille A comporte un acétal de polyvinyle PA ayant une proportion de groupes d'alcool vinylique comprise entre 6 et 26 % et la feuille B comporte un acétal de polyvinyle PB ayant une proportion de groupes d'alcool vinylique comprise entre 14 et 26 % en poids.

5. Panneau de verre feuilleté aux propriétés d'écran thermique selon l'une des revendications 1 à 4, **caractérisé en ce que** la feuille B comporte 0,001 à 0,1 % en poids de sels alcalins et/ou alcalino-terreux d'acides carboxyliques.

6. Panneau de verre feuilleté aux propriétés d'écran thermique selon l'une des revendications 1 à 5, **caractérisé en ce que**, par rapport à la feuille B, la feuille A présente une surface plus petite.

7. Panneau de verre feuilleté aux propriétés d'écran thermique selon l'une des revendications 1 à 6, **caractérisé en ce que** la feuille A présente au moins un évidement, de manière à ce qu'à travers ledit évidement, la feuille B soit en contact direct avec la vitre adjacente à la feuille A.

8. Panneau de verre feuilleté aux propriétés d'écran thermique selon l'une des revendications 1 à 7, **caractérisé en ce que** la feuille B est constituée d'au moins deux feuilles partielles B' et B" présentant des teneurs en plastifiant différentes.

9. Panneau de verre feuilleté aux propriétés d'écran thermique selon l'une des revendications 1 à 8, **caractérisé en ce que** la feuille B présente un profil d'épaisseur cunéiforme.

10. Panneau de verre feuilleté aux propriétés d'écran thermique selon l'une des revendications 1 à 9, **caractérisé en ce que** la feuille B présente une zone partielle colorée.

11. Panneau de verre feuilleté aux propriétés d'écran thermique selon l'une des revendications 1 à 10, **caractérisé en ce que** la feuille A présente une zone partielle colorée.

12. Panneau de verre feuilleté aux propriétés d'écran thermique selon l'une des revendications 1 à 11, **caractérisé en ce que** la feuille A présente une épaisseur comprise entre 1 et 150 µm.

13. Panneau de verre feuilleté aux propriétés d'écran thermique selon l'une des revendications 1 à 12, **caractérisé en ce que** la feuille A comporte moins de 150 ppm d'ions de chlorure et/ou d'ions de nitrate et/ou d'ions de sulfate.

14. Panneau de verre feuilleté aux propriétés d'écran thermique selon l'une des revendications 1 à 13, **caractérisé en ce que** la feuille A comporte plus de 0 ppm d'ions de magnésium.

15. Procédé de fabrication d'un panneau de verre feuilleté selon l'une des revendications 1 à 12, **caractérisé en ce que** la feuille A est positionnée sur une vitre, puis recouverte par au moins une feuille B sur laquelle on pose une deuxième vitre.
